# EUROPÄISCHE PATENTANMELDUNG

(11) **EP 0 613 002 A2**
(43) Veröffentlichungstag der Anmeldung: **31.08.1994**
(21) Anmeldenummer: 94250008.3
(22) Anmeldetag: 20.01.1994
(51) Int. Cl.: G01N 27/447

(54) **Verfahren und Anordnung zur Probenvorbereitung und Probenahme für die Kapillarelektrophorese**

(30) Priorität: 22.02.1993 DE 4305731
(71) Anmelder: INSTITUT FÜR BIOPROZESS- UND ANALYSENMESSTECHNIK e.V., D-37308 Heiligenstadt (DE)
(72) Erfinder: Spohn, Uwe, Dr. Dipl.-Chem., D-06120 Halle (DE); Beckmann, Dieter, Dipl.-Phys., D-37308 Heiligenstadt (DE); Gruber, Ronald Dipl.-Biochem., D-37308 Geisleden (DE)
(74) Vertreter: Maikowski, Michael, Dipl.-Ing. Dr.

(57) **Zusammenfassung**

Es soll eine schnelle Probenvorreinigung und eine reproduzierbare und automatische Derivatisierung von Probensubstanzen sowie eine reproduzierbare Einbringung der Probe in die Trennkapillare erreicht werden.

Dazu werden sowohl die zu analysierende Probensubstanz einem Durchflußreaktor als auch die dort umgesetzten Substanzen der Trennkapillare mit einem vorgewählten Konzentrations - Zeitprofil zugeführt. Die Zuführung der umgesetzten Substanzen zur Trennkapillare erfolgt über einen definierten Volumenstrom, z.B. über eine dünne strömende Flüssigkeitsschicht.

Das erfindungsgemäße Verfahren und die Anordnung ermöglichen die periodische Dosierung von Online-Proben, wodurch die Kapillarelektrophorese auch in der Prozeßsteuerung einsetzbar ist.

## Beschreibung

Die Erfindung bezieht sich auf die automatische Probenvorbereitung für die Kapillarelektrophorese und ist insbesondere für den Einsatz in der Prozeßanalytik bestimmt.

Die Kapillarelektrophorese ist ein analytisches Verfahren zur Charakterisierung flüssiger Lösungen. Eine Anordnung zur Durchführung der Kapillarelektrophorese besteht im wesentlichen aus zwei Puffergefäßen, in die Anfang und Ende der Kapillare sowie je eine Elektrode eintauchen. An den Elektroden liegt eine elektrische Hochspannung an. An einem Ende der Kapillare werden die getrennten Probenmoleküle durch einen Detektor nachgewiesen.

Bei der Kapillarelektrophorese können unterschiedliche Trennmechanismen ausgenutzt werden. So wird z. B. bei der Kapillarzonenelektrophorese eine Kapillare verwendet, die mit der Pufferlösung und der Probe keine Wechselwirkung aufweist. Die Ionen, die sich aus den Probenmolekülen bilden, wandern unter dem Einfluß des elektrischen Feldes in der Pufferlösung als Laufmittel durch die Kapillare, wobei die Wanderungsgeschwindigkeit von der Ladung und der Ionengröße abhängig ist. Auf diese Weise wird eine Trennung von Substanzen erreicht.

Zur Probeninjektion ist es bekannt, ein Probenfläschchen unter den Kapillareinlaß zu fahren und durch Anheben des Probenfläschchens oder durch Druckbeaufschlagung des Probenfläschchens die Probe der Kapillare zuzuführen.

Es ist auch bekannt, die in der Probenlösung enthaltenen Substanzen direkt oder nach zeitaufwendiger chemischer Umsetzung in einem Reaktor durch Eintauchen der Kapillare in die Probenlösung durch Elektromigration oder Elektroosmose aufzunehmen und zu trennen.

Der Nachteil der Injektion mit Probefläschchen besteht darin, daß keine periodische Dosierung von Online-Proben möglich ist.
(A.Freudenberger, S.Stieler; technisches messen, 11/91, S. 421-422).
(W.G.Kuhr, C.A.Monning; Anal.Chem.64 (1992), S.392R)

Weiterhin ist die sogenannte Split-Flow-Injektion bekannt (T.Tsuda; Anal.Chem. 64, 1992, S.386-390), bei der die Probensubstanzen in vorher derivatisierter Form oder unmodifiziert in einen Durchflußkanal injiziert und anschließend auf den Eingang der Kapillare gespült werden. Dabei tritt ein Empfindlichkeitsverlust infolge Verdünnung auf. Die zuletzt genannte Technik setzt in vielen Fällen einen externen Anreicherungs- und Derivatisierungsschritt voraus.

Die bisherigen Probenahmetechniken erlauben es nicht, reale Proben, z.B. aus Abwässern und flüssigen Lebensmitteln on-line durch Kapillarelektrophorese zu analysieren.

Der Erfindung liegt die Aufgabe zugrunde, sowohl eine schnelle Probenvorreinigung als auch eine reproduzierbare und automatische Derivatisierung von Probensubstanzen sowie eine reproduzierbare Einbringung der Probe in die Trennkapillare zu erreichen.

Erfindungsgemäß wird das durch die Merkmale des Anspruchs 1 erreicht.

Bei einem Verfahren zur Probenvorbereitung und Probenahme bei dem die in einen Trägerstrom injizierte zu analysierende Probe zur Erzielung von mit höherer Empfindlichkeit detektierbaren und mit höherer Auflösung auftrennbaren Substanzen zunächst chemisch umgesetzt wird und die durch die Umsetzung entstandenen Substanzen anschließend der Trennkapillare zugeführt werden, werden erfindungsgemäß sowohl die zu analysierende Probe einem Durchflußreaktor als auch die durch die Umsetzung entstandenen Substanzen der Trennkapillare mit einem vorgewählten Konzentrations-Zeitprofil zugeführt. Die Zuführung der durch die Umsetzung entstandenen Substanzen zur Trennkapillare erfolgt über einen definierten Volumenstrom. Der definierte Volumenstrom kann zum Beispiel eine dünne strömende Flüssigkeitsschicht sein, die zwischen einer Zuführungskapillare und der Trennkapillare erzeugt wird.

Es ist zweckmäßig, daß der Trägerstrom eine konstante Geschwindigkeit hat, in den periodisch die zu untersuchende Probe injiziert wird. Weiterhin ist es zweckmäßig, daß zwischen dem Ort der Probeneinbringung und dem Ausgang des Durchflußreaktors mittels Membrantrennschritten wie Dialyse, Filtration und Extraktion eine Reinigung, Verdünnung oder Anreicherung der in der Probenlösung zu bestimmenden Substanzen erfolgt.

Es ist weiterhin zweckmäßig, daß die sich ausbildenden Konzentrationsprofile der im Durchflußreaktor durch die Umsetzung entstandenen Substanzen zeitlich gesteuert, d.h. nach Modulierung der Durchflußgeschwindigkeiten und Stopzeiten im und nach dem Durchflußreaktor, der Trennkapillare zugeführt werden.

Eine Anordnung zur Durchführung des Verfahrens hat erfindungsgemäß einen ersten Durchflußreaktor, dem eine Pumpe zur Erzeugung eines Trägerstromes und ein Injektionsventil oder eine hydrodynamische Injektionsanordnung mit zeitgesteuerten Pumpen oder eine Vorrichtung mit Spritzenkanüle für die Probeninjektion vorgeordnet sind. Der erste Durchflußreaktor ist erfindungsgemäß über ein definiert durchströmtes Volumen mit der Trennkapillare verbunden.

Das definiert durchströmte Volumen kann ein Spalt sein, der vorzugsweise senkrecht zur Strömungsrichtung der Trennkapillare verläuft und zwischen deren Eintrittsöffnung und der Austrittsöffung einer Anschlußkapillare angeordnet ist.

Das definiert durchströmte Volumen kann auch im Durchflußreaktor vorgesehen sein, indem in diesem eine der Elektroden für die Kapillarelektrophorese als Anschlußkapillare zentrisch angeordnet ist und in dieser Elektrode ebenfalls zentrisch die Trennkapillare angeordnet ist.

Der Durchflußreaktor hat zweckmäßig Trennzellen zur Dialyse, Filtration und Extraktion zwecks Reinigung, Verdünnung oder Anreicherung der in der Probenlösung zu bestimmenden Substanzen oder ist mit solchen verbunden.

Zur Vorbereitung gasförmiger Proben für die Analyse in der Trennkapillare, kann der Durchflußreaktor eine kontinuierlich arbeitende Vorrichtung zur Aufnahme von Probensubstanzen aus gasförmigen Proben haben oder mit einer solchen verbunden sein.

Für bestimmte Anwendungen ist es zweckmäßig, daß dem ersten Durchflußreaktor ein zweiter Durchflußreaktor für die weitergehende Behandlung der Probensubstanzen nachgeordnet ist, dem eine weitere Pumpe zur Erzeugung eines Trägerstromes zugeordnet ist.

Mit dem erfindungsgemäßen Verfahren und der zugehörigen Anordnung wird die periodische Dosierung von Online-Proben möglich. Damit wird es möglich die Kapillarelektrophorese auch in der Prozeßsteuerung einzusetzen.

Die Erfindung soll in Ausführungsbeispielen anhand von Zeichnungen erläutert werden. Es zeigen:
- Fig. 1: eine erste Ausführungsart für die schnelle Charakterisierung von Peptiden;
- Fig. 2: ein online-Probenahmesystem mit in-situ-Derivatisierung am Ort der Probenahme;
- Fig. 3: ein Probenahmesystem zur gasdialytisch-reaktiven Abtrennung der zu analysierenden Substanzen;
- Fig. 4: ein Probenahmesystem zur Anreicherung von Spurensubstanzen mittels Festphasenextraktion und automatischer Elution.

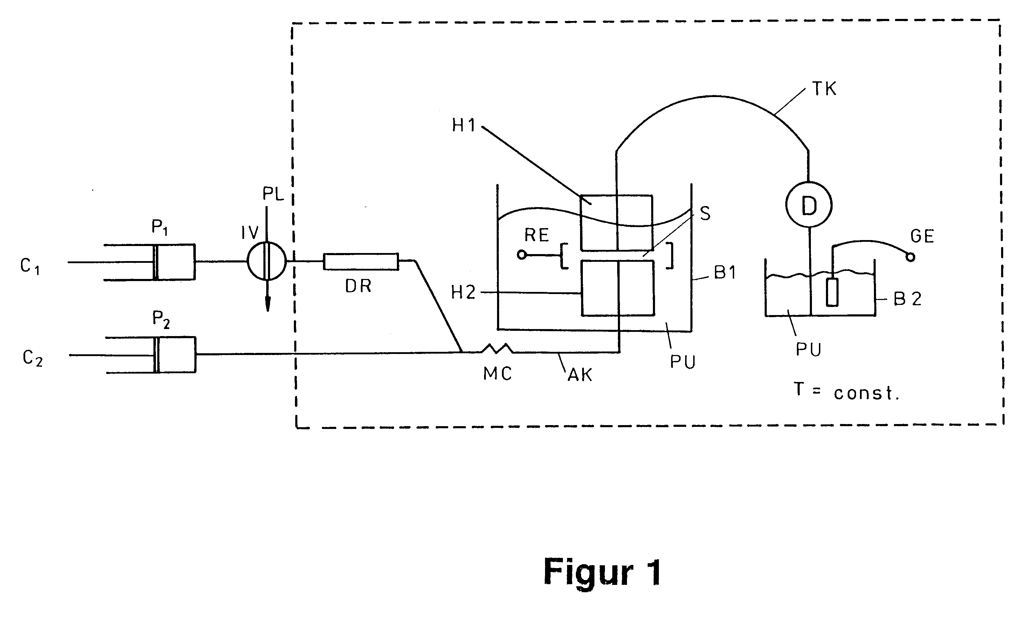

Die erfindungsgemäße Anordnung der Fig. 1 hat als ersten Durchflußreaktor DR ein gepacktes Strömungsrohr mit immobilisiertem Enzym. Der Durchflußreaktor DR ist über eine Anschlußkapillare AK und über einen definiert durchströmten Spalt S mit der Trennkapillare TK verbunden. Anschlußkapillare AK und Trennkapillare TK sind zur Bildung des Spaltes S in Halterungen H1, H2 fixiert. Die Trennkapillare TK hat in bekannter Weise in der Nähe ihres Einganges eine Elektrode - im vorliegenden Fall eine Ringelektrode RE - und in der Nähe ihres Ausganges eine Gegenelektrode GE, an die zum Aufbau eines elektrischen Feldes eine Hochspannung angelegt wird. In der Nähe des Ausgangs der Trennkapillare ist in bekannter Weise auch ein Detektor D zum Nachweis der getrennten Substanzen angeordnet. Die Enden der Trennkapillare TK tauchen ebenfalls in bekannter Weise in eine Pufferlösung PU, die sich in Behältern B1 und B2 befindet. Die für die Fixierung der Enden der Trennkapillare TK und der Anschlußkapillare AK vorgesehenen Haltekörper HK sind so angeordnet, daß zwischen diesen der bereits genannte Spalt S gebildet wird.

Dem Durchflußreaktor vorgelagert ist ein Injektionsventil IV sowie eine erste Pumpe P1 für einen ersten Trägerstrom C1. Parallel dazu ist eine zweite Pumpe P2 für einen zweiten Trägerstrom C2 angeordnet. Diesem zugeordnet ist ein dem ersten Durchflußreaktor DR nachgeordneter zweiter Durchflußreaktor MC.

Die Probenlösung wird über das Injektionsventil IV in den Trägerstrom C1 injiziert und mit dem darin enthaltenen Konditionierpuffer vermischt. Im Durchflußreaktor DR befindet sich immobilisiertes Trypsin. In der Probenlösung enthaltenes Peptid oder Protein wird zu kleineren Bruchstücken hydrolysiert. Im nachgeschalteten Durchflußreaktor MC erfolgt Derivatisierung mit 2.3-Naphtendialdehyd und Cyanid, die im Trägerstrom C2 gelöst vorliegen. Die auf diese Weise erzeugte Reaktionszone gelangt zum Spalt S, in dem die elektrophoretische und elektroosmotische Aufnahme der einzelnen derivatisierten Bruchstücke des Analyten in die Trennkapillare TK erfolgt. Durch Einstellung von Stopzeiten in den Durchflußreaktoren DR und MC wird der notwendige Umsatzgrad der Probensubstanzen eingestellt. Durch Einstellung der Strömungsgeschwindigkeit bzw. von verschiedenen Stopzeiten im Spalt S kann die Menge der in der Trennkapillare aufzutrennenden Substanzen vorgewählt werden.

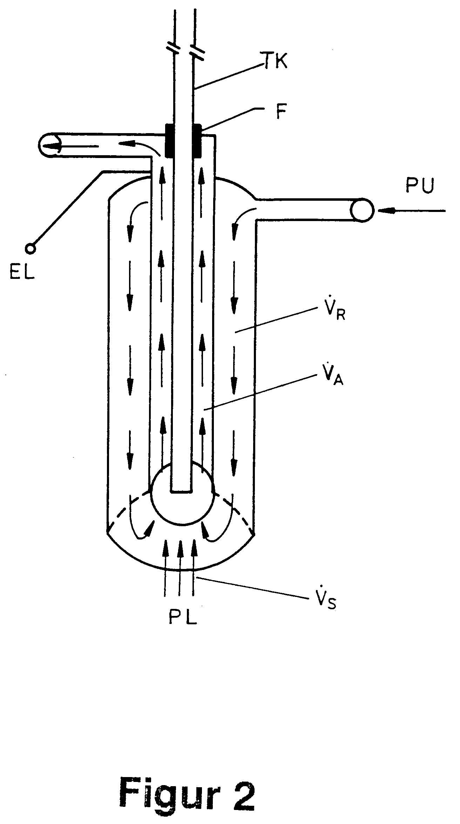

Als eine Ausführungsart ist in Fig. 2 der Durchflußreaktor als doppellumiges Kapillarsystem mit integrierter Trennkapillare dargestellt. In den Durchflußreaktor ragt eine Elektrode EL und die Trennkapillare TK, die in einer Kapillarhaltefassung F befestigt ist. Die Elektrode EL ist als nach außen isolierte Aufnahmekapillare ausgeführt. Durch Einstellung und Steuerung der Durchflußgeschwindigkeiten des Reagenz- und Verdünnungstromes v_{R} der Elektrophorese-Pufferlösung PU, des Ansaugstromes v_{A} der Probenlösung PL, so daß v_{A} > v_{R} ist, wird der Probenaufnahmestrom v_{S} zwischen Null und 0,5 mlmin⁻¹ eingestellt. Auf diese Weise wird die Probenlösung PL in-situ mit der Elektrophorese-Pufferlösung PU konditioniert und gegebenenfalls chemisch umgewandelt. Im Beispiel werden in der Probenlösung undissoziert vorliegende Carbonsäuren in die entsprechenden Carboxylate umgewandelt. Während einer kurzen, präzis einstellbaren Zeit wird der Probenaufnahmestrom v_{S} auf Werte größer Null eingestellt. Beim Anspülen der Trennkapillare TK erfolgt die elektrophoretische und elektroosmotische Aufnahme der aufzutrennenden und zu bestimmenden Carboxylate, die UV-photometrisch oder nach Derivatisierung fluorimetrisch in einem Kapillardetektor D (Fig.1) gemessen werden.

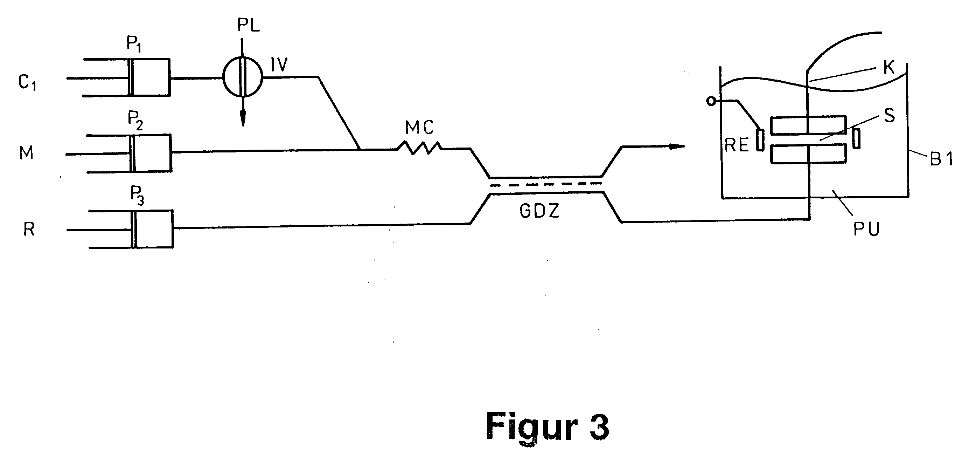

Bei der Ausführungsform der Fig. 3 sind parallel zueinander drei Pumpen P1, P2 und P3 für den Trägerstrom C1, einen Trägerstrom M und ein Derivatisierungsreagens R angeordnet. Die Probenlösung PL, die verschiedene Amine enthält, wird in den stark alkalischen Trägerstrom C1 injiziert, indem die niedermolekularen Amine in ihre flüchtige Form überführt werden. Die flüchtigen Amine werden nach Vermischung mit dem Trägerstrom M in einer Gasdialysezelle GDZ über eine mikroporöse Teflonmembran in das Derivatisierungsreagens R überführt, das aus 50 mgl⁻¹ Orthophtalaldehyd und 10 mgl⁻¹ Thioglykolsäure in 40 mM Boratpuffer (pH 10.6) besteht. Die dabei entstehenden Isoindolderivate werden nach Passieren des Spaltes S in der Trennkapillare TK aufgetrennt und laser-fluorimetrisch detektiert.

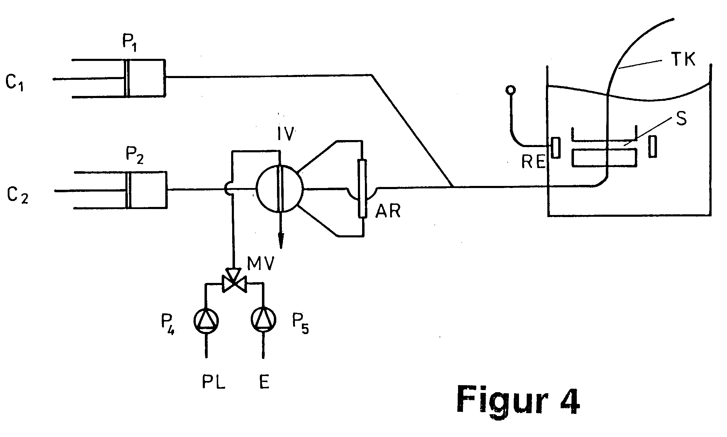

Bei der Ausführungsform der Fig. 4 ist ein Durchflußreaktor AR in die Dosierschleife des Injektionsventils IV eingebaut. Die Probensubstanz wird über ein im Durchflußreaktor AR enthaltenes Adsorbens gepumpt und angereichert. Kombiniert mit der anschließenden Injektion in den Trägerstrom C2 erfolgt Elution der angereicherten Substanz mit einem geeigneten Lösungsmittel. In der Ventilstellung -Füllenwird die Probenlösung zunächst über das Adsorbens gepumpt und dadurch angereichert. Nach Umschaltung eines 3/2-Wegemagnetventils MV wird von der Probenlösung PL auf das Elutionsmittel E umgeschaltet. Simultan dazu wird eine Pumpe P4 aus- und eine Pumpe P5 eingeschaltet. Die injizierte Probenlösungszone wird nachfolgend durch Vermischung mit dem Trägerstrom C1 auf den elektrophoretischen Puffer eingestellt. Beim Passieren des Spaltes S erfolgt in bekannter Weise die elektrophoretische und elektroosmotische Aufnahme der aufzutrennenden und zu bestimmenden Probensubstanzen in der Trennkapillare TK.

Diese Ausführungsform kann zur Bestimmung von chlorierten Phenol- und Naphtolderivaten verwendet werden, wobei diese Substanzen in einer c₁₈ - reversed phase Festphasenextraktionskartusche adsorbtiv angereichert und anschließend mit leicht alkalischer Methanollösung oder wäßriger Acetonitrillösung eluiert werden können.

## Patentansprüche

1. Verfahren zur Probenvorbereitung und Probenahme für die Kapillarelektrophorese, bei dem die in einen Trägerstrom injizierte zu untersuchende Probe zur Erzielung von mit höherer Empfindlichkeit detektierbaren und mit höherer Auflösung auftrennbaren Substanzen zunächst chemisch umgesetzt wird und die durch die Umsetzung entstandenen Substanzen anschließend der Trennkapillare zugeführt werden,
**dadurch gekennzeichnet**, daß
sowohl die zu analysierende Probensubstanz einem Durchflußreaktor als auch die durch die Umsetzung entstandenen Substanzen der Trennkapillare mit einem vorgewählten Konzentrations- Zeitprofil zugeführt werden und daß die durch die Umsetzung entstandenen Substanzen der Trennkapillare über einen definierten Volumenstrom zugeführt werden.

2. Verfahren nach Anspruch 1, **dadurch gekennzeichnet**, daß die durch die Umsetzung entstandenen Substanzen über eine dünne strömende Flüssigkeitsschicht zugeführt werden, die zwischen einer Zuführungskapillare und der Trennkapillare erzeugt wird.

3. Verfahren nach Anspruch 1 und 2, **dadurch gekennzeichnet**, daß der Trägerstrom eine konstante Geschwindigkeit hat und daß die zu untersuchende Probe periodisch in den Trägerstrom injiziert wird.

4. Verfahren nach mindestens einem der Ansprüche 1 bis 3, **dadurch gekennzeichnet**, daß zwischen dem Ort der Probeneinbringung und dem Ausgang des Durchflußreaktors mittels Membrantrennschritten wie Dialyse, Filtration und Extraktion eine Reinigung, Verdünnung oder Anreicherung der in der Probenlösung zu bestimmenden Substanzen erfolgt.

5. Verfahren nach mindestens einem der Ansprüche 1 bis 4, **dadurch gekennzeichnet**, daß die sich ausbildenden Konzentrationsprofile der im Durchflußreaktor durch die Umsetzung entstandenen Substanzen zeitlich gesteuert, d.h. nach Modulierung der Durchflußgeschwindigkeiten und Stopzeiten im und nach dem Durchflußreaktor, der Trennkapillare zugeführt werden.

6. Anordnung zur Durchführung des Verfahrens nach Anspruch 1, **dadurch gekennzeichnet**, daß ein erster Durchflußreaktor (DR) angeordnet ist, dem eine Pumpe (P1) zur Erzeugung eines Trägerstromes (C1) und ein Injektionsventil (IV) oder eine hydrodynamische Injektionsanordnung mit zeitgesteuerten Pumpen oder eine Vorrichtung mit Spritzenkanüle für die Probeninjektion vorgeordnet sind, und daß der erste Durchflußreaktor (DR) über ein definiert durchströmtes Volumen mit der Trennkapillare (TK) verbunden ist.

7. Anordnung nach Anspruch 6, **dadurch gekennzeichnet**, daß das definiert durchströmte Volumen ein Spalt (S) ist, der vorzugsweise senkrecht zur Strömungsrichtung der Trennkapillare (TK) verläuft und daß er zwischen deren Eintrittsöffnung und der Austrittsöffung einer Anschlußkapillare (AK) angeordnet ist.

8. Anordnung nach Anspruch 6, **dadurch gekennzeichnet**, daß das definiert durchströmte Volumen im Durchflußreaktor vorgesehen ist, indem in diesem eine der Elektroden (EL) für die Kapillarelektrophorese als Anschlußkapillare zentrisch angeordnet ist und in dieser Elektrode (EL) ebenfalls zentrisch die Trennkapillare (TK) angeordnet ist.

9. Anordnung nach mindestens einem der Ansprüche 6 bis 8, **dadurch gekennzeichnet**, daß zur Vorbereitung gasförmiger Proben für die Analyse in der Trennkapillare (TK) der Durchflußreaktor (DR) eine kontinuierlich arbeitende Vorrichtung zur Aufnahme von Probensubstanzen aus gasförmigen Proben hat oder mit einer Gasdialysezelle (GDZ) verbunden ist.

10. Anordnung nach mindestens einem der Ansprüche 6 bis 9, **dadurch gekennzeichnet**, daß dem ersten Durchflußreaktor (DR) ein zweiter Durchflußreaktor (MC) für die weitergehende Behandlung der Probensubstanzen nachgeordnet ist, dem eine weitere Pumpe (P2) zur Erzeugung eines Trägerstromes (C2, M) zugeordnet ist.

11. Anordnung nach mindestens einem der Ansprüche 6 bis 10, **dadurch gekennzeichnet**, daß mindestens ein Durchflußreaktor Trennzellen zur Dialyse, Filtration und Extraktion zwecks Reinigung, Verdünnung oder Anreicherung der in der Probenlösung zu bestimmenden Substanzen hat oder mit solchen verbunden ist.
